# EUROPEAN PATENT APPLICATION

(11) **EP 4 628 534 A1**
(43) Date of publication of application: **08.10.2025**
(21) Application number: 23897701.1
(22) Date of filing: 24.11.2023
(51) Int. Cl.: C08L 33/04, C08J 5/00, C08K 5/17

(54) **ACRYLIC RUBBER COMPOSITION, CROSS-LINKED RUBBER, HOSE MATERIAL, SEALANT, TUBE MATERIAL, BELT MATERIAL, AND BOOT MATERIAL**

(30) Priority: 30.11.2022 JP 2022191723
(71) Applicant: Zeon Corporation, Tokyo 100-8246 (JP)
(72) Inventor: SAKAKIDA, Hiroshi, Tokyo 100-8246 (JP); BANDO, Fumiaki, Tokyo 100-8246 (JP)
(74) Representative: Maiwald GmbH
(86) International application number: PCT/JP2023/042247
(87) International publication number: WO 2024/117053

(57) **Abstract**

Provided is an acrylic rubber composition comprising particular amounts of a particular acrylic rubber (A), a polyamine-based cross-linking agent (B), and a cross-linking retarder (C), wherein the relation among cross-linking point equivalent [a], cross-linking agent amine equivalent [b], and cross-linking retarder amine equivalent [c] satisfies the following formulae (1) and (2). 10 mephr ≤ cross-linking point equivalent [a] ≤ 25 mephr 2 ≤ (cross-linking point equivalent [a] - cross- linking retarder amine equivalent [c])/cross-linking agent amine equivalent [b] ≤ 4

## Description

### TECHNICAL FIELD

The present invention relates to an acrylic rubber composition, a cross-linked rubber, a hose material, a sealing material, a tubing material, a belt material, and a boot material.

### BACKGROUND ART

A method usually used for cross-linking an acrylic rubber composition includes a method comprising heating the composition at about 150°C to 190°C for several minutes to tens of minutes for primary cross-linking, and thereafter heating the composition under a heated air atmosphere at 140°C to 200°C for several hours for secondary cross-linking (Patent Document 1).

### RELATED ART DOCUMENT

### PATENT DOCUMENT

Patent Document 1: JP 2009-084514 A

### SUMMARY OF THE INVENTION

### PROBLEMS TO BE SOLVED BY THE INVENTION

From the viewpoint of productivity of a cross-linked rubber, energy saving, and carbon neutrality, an acrylic rubber composition that can give a cross-linked rubber having good physical properties by only primary cross-linking without need for secondary cross-linking is desired.

The present invention has been made in consideration of such circumstances, and an object of the present invention is to provide an acrylic rubber composition that has good scorch stability and also can give a cross-linked rubber having sufficient mechanical properties without performing secondary cross-linking.

### MEANS FOR SOLVING PROBLEMS

The present inventors, who have conducted extensive research, have found that the above object can be solved by an acrylic rubber composition comprising particular amounts of a particular acrylic rubber (A), a polyamine-based cross-linking agent (B), and a cross-linking retarder (C), wherein the relation among cross-linking point equivalent [a], cross-linking agent amine equivalent [b], and cross-linking retarder amine equivalent [c] satisfies formulae (1) and (2), and thus completed the present invention.

Specifically, the present invention provides an acrylic rubber composition, a cross-linked rubber, a hose material, a sealing material, a tubing material, a belt material, and a boot material described below.
[1] An acrylic rubber composition comprising an acrylic rubber (A), a polyamine-based cross-linking agent (B), and a cross-linking retarder (C),
   wherein the acrylic rubber (A) contains at least one of an alkyl (meth)acrylate ester monomer unit and an alkoxyalkyl (meth)acrylate ester monomer unit, and a carboxyl group-containing monomer unit,
   the content of the polyamine-based cross-linking agent (B) is 0.4 to 1.6 parts by weight relative to 100 parts by weight of the acrylic rubber (A),
   the content of the cross-linking retarder (C) is 0.4 to 1.5 parts by weight relative to 100 parts by weight of the acrylic rubber (A), and
   the relation among cross-linking point equivalent [a] (mephr), cross-linking agent amine equivalent [b] (mephr), and cross-linking retarder amine equivalent [c] (mephr) satisfies the following formulae (1) and (2): 10 mephr ≤ cross-linking point equivalent [a] ≤ 25 mephr 2 ≤ (cross-linking point [a] equivalent - cross- linking retarder amine equivalent [c])/cross-linking agent amine equivalent [b] ≤ 4
[2] The acrylic rubber composition according to [1], wherein the polyamine-based cross-linking agent (B) is a diamine compound.
[3] The acrylic rubber composition according to [1] or [2], wherein the polyamine-based cross-linking agent (B) is an aromatic polyamine compound.
[4] The acrylic rubber composition according to any one of [1] to [3], wherein the cross-linking retarder (C) is a monoamine-based cross-linking retarder.
[5] The acrylic rubber composition according to any one of [1] to [4], further comprising a filler.
[6] A cross-linked rubber obtained by cross-linking the acrylic rubber composition according to any one of [1] to [5].
[7] A hose material, a sealing material, a tubing material, a belt material, or a boot material, comprising the cross-linked rubber according to [6].

### EFFECTS OF THE INVENTION

The present invention provides an acrylic rubber composition that has good scorch stability and also can give a cross-linked rubber having sufficient mechanical properties without performing secondary cross-linking.

### DESCRIPTION OF EMBODIMENTS

The acrylic rubber composition according to the present invention is an acrylic rubber composition comprising an acrylic rubber (A), a polyamine-based cross-linking agent (B), and a cross-linking retarder (C),
wherein the acrylic rubber (A) contains an alkyl (meth)acrylate ester monomer unit and/or an alkoxyalkyl (meth)acrylate ester monomer unit, and a carboxyl group-containing monomer unit,
the content of the polyamine-based cross-linking agent (B) is 0.4 to 1.6 parts by weight relative to 100 parts by weight of the acrylic rubber (A),
the content of the cross-linking retarder (C) is 0.4 to 1.5 parts by weight relative to 100 parts by weight of the acrylic rubber (A),
the relation among cross-linking point equivalent [a] (mephr), cross-linking agent amine equivalent [b] (mephr), and cross-linking retarder amine equivalent [c] (mephr) satisfies the following formulae (1) and (2). 10 mephr ≤ cross-linking point equivalent [a] ≤ 25 mephr 2 ≤ (cross-linking point equivalent [a] - cross- linking retarder amine equivalent [c])/cross-linking agent amine equivalent [b] ≤ 4

The acrylic rubber composition according to the present invention not only comprises specific amounts of the above-described specific acrylic rubber (A), the amine-based cross-linking agent (B), and the cross-linking retarder (C) in combination, but also is controlled such that the relation among the cross-linking point equivalent [a] (mephr), the cross-linking agent amine equivalent [b] (mephr), and the cross-linking retarder amine equivalent [c] (mephr) satisfies formulae (1) and (2). Since the acrylic rubber composition according to the present invention has such a constitution, it has good scorch stability and also can give a cross-linked rubber having sufficient mechanical properties (specifically, tensile properties, tensile properties after aging, and compression set resistance) without performing secondary cross-linking.

### <Acrylic rubber (A)>

The acrylic rubber (A) used in the present invention comprises an alkyl (meth)acrylate ester monomer unit and/or an alkoxyalkyl (meth)acrylate ester monomer unit, and a carboxyl group-containing monomer unit.

The acrylic rubber (A) used in the present invention comprises at least one (meth)acrylic acid ester monomer unit selected from alkyl (meth)acrylate ester monomer units and alkoxyalkyl (meth)acrylate ester monomer units.

The alkyl (meth)acrylate ester refers to an alkyl acrylate ester and/or an alkyl methacrylate ester. The alkoxyalkyl (meth)acrylate ester monomer refers to an alkoxyalkyl acrylate ester monomer and/or an alkoxyalkyl methacrylate ester monomer. Hereinafter, the word "(meth)acryl" should be interpreted in the same manner as described above.

Although alkyl (meth)acrylate ester monomers which form the alkyl (meth)acrylate ester monomer units are not particularly limited, preferred are (meth)acrylic acid esters of C₁ to C₁₂ alkanols ((meth)acrylic acid esters having a C₁ to C₁₂ alkyl group), more preferred are (meth)acrylic acid esters of C₁ to C₈ alkanols ((meth)acrylic acid esters having a C₁ to C₈ alkyl group), and still more preferred are (meth)acrylic acid esters of C₂ to C₆ alkanols ((meth)acrylic acid esters having a C₂ to C₆ alkyl group).

Specific examples of such alkyl (meth)acrylate ester monomers include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth) acrylate, cyclohexyl (meth)acrylate, and the like. Among these, preferred are ethyl (meth)acrylate and n-butyl (meth)acrylate, and more preferred are ethyl acrylate and n-butyl acrylate. These can be used alone or in combination.

For example, the acrylic rubber (A) used in the present invention may contain both an ethyl acrylate unit and an n-butyl acrylate unit as the alkyl (meth)acrylate ester monomer units. In this case, the ratio of the contents of these two monomer units by weight [content of ethyl acrylate unit:content of n-butyl acrylate unit] is preferably 1:99 to 99:1, more preferably 10:90 to 90:10, still more preferably 20:30 to 85:15, particularly preferably 30:70 to 80:20.

Although alkoxyalkyl (meth)acrylate ester monomers which form the alkoxyalkyl (meth)acrylate ester monomer units are not particularly limited, preferred are (meth)acrylic acid esters of C₂ to C₁₂ alkoxyalkyl alcohols ((meth)acrylic acid esters having a C₂ to C₁₂ alkoxyalkyl group), more preferred are (meth)acrylic acid esters of C₂ to C₈ alkoxyalkyl alcohols ((meth)acrylic acid esters having a C₂ to C₈ alkoxyalkyl group), and still more preferred are (meth)acrylic acid esters of C₂ to C₆ alkoxyalkyl alcohols ((meth)acrylic acid esters having a C₂ to C₆ alkoxyalkyl group).

Specific examples of such alkoxyalkyl (meth)acrylate ester monomers include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Among these, preferred are 2-ethoxyethyl (meth)acrylate and 2-methoxyethyl (meth)acrylate, and particularly preferred are 2-ethoxyethyl acrylate and 2-methoxyethyl acrylate. These can be used alone or in combination.

The total content of the alkyl (meth)acrylate ester monomer unit and the alkoxyalkyl (meth)acrylate ester monomer unit is preferably 50 to 98.7% by weight, more preferably 70 to 98.7% by weight, still more preferably 80 to 98.6% by weight, particularly preferably 85 to 98.5% by weight, most preferably 90 to 98% by weight in the total monomer units contained in the acrylic rubber (A) used in the present invention. When the content of the (meth)acrylic acid ester monomer unit is within the ranges above, a cross-linked rubber having more excellent mechanical properties can be obtained.

The acrylic rubber (A) used in the present invention may contain only one of the alkyl (meth)acrylate ester monomer unit and the alkoxyalkyl (meth)acrylate ester monomer unit, or may contain both of them. The acrylic rubber (A) used in the present invention preferably contains at least the alkyl (meth)acrylate ester monomer unit.

When the acrylic rubber (A) used in the present invention contains the alkyl (meth)acrylate ester monomer unit, the content thereof is preferably 1 to 98.7% by weight, more preferably 1 to 98.6% by weight, still more preferably 5 to 98.5% by weight, particularly preferably 5 to 98% by weight in the total monomer units contained in the acrylic rubber (A).

When the acrylic rubber (A) used in the present invention contains the alkoxyalkyl (meth)acrylate ester monomer unit, the content thereof is preferably 1 to 70% by weight, more preferably 1 to 60% by weight, still more preferably 2 to 60% by weight, particularly preferably 3 to 50% by weight in the total monomer units contained in the acrylic rubber (A).

When the acrylic rubber (A) used in the present invention contains the alkyl (meth)acrylate ester monomer unit and the alkoxyalkyl (meth)acrylate ester monomer unit, the ratio of the contents of these two monomer units by weight [content of alkyl (meth)acrylate ester monomer unit:content of alkoxyalkyl (meth)acrylate ester monomer unit] is preferably 1:99 to 99:1, more preferably 50:50 to 98:2, still more preferably 80:20 to 95:5.

The acrylic rubber (A) used in the present invention contains a carboxyl group-containing monomer unit in addition to the alkyl (meth)acrylate ester monomer unit and/or the alkoxyalkyl (meth)acrylate ester monomer unit.

Examples of the carboxyl group-containing monomers which form the carboxyl group-containing monomer units include, but should not be limited to, α,β-ethylenically unsaturated dicarboxylic acid monoester monomers, α,β-ethylenically unsaturated monocarboxylic acids, α,β-ethylenically unsaturated dicarboxylic acids, and the like.

As the α,β-ethylenically unsaturated dicarboxylic acid monoester monomers, preferred are monoesters of C₄ to C₁₂ α,β-ethylenically unsaturated dicarboxylic acids and C₁ to C₁₂ alkanols, more preferred are monoesters of C₄ to C₆ α,β-ethylenically unsaturated dicarboxylic acids and C₂ to C₈ alkanols, and still more preferred are monoesters of C₄ α,β-ethylenically unsaturated dicarboxylic acids and C₂ to C₆ alkanols.

Specific examples of the α,β-ethylenically unsaturated dicarboxylic acid monoester monomers include linear monoalkyl esters of butenedioic acid, such as monomethyl fumarate, monoethyl fumarate, mono-n-butyl fumarate, monomethyl maleate, monoethyl maleate, and mono-n-butyl maleate; butenedioic acid monoesters having an alicyclic structure, such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters, such as monomethyl itaconate, monoethyl itaconate, mono-n-butyl itaconate, and monocyclohexyl itaconate; and the like. These can be used alone or in combination. Among these monomers listed above, the dicarboxylic acids include those present as anhydrides thereof.

Specific examples of the α,β-ethylenically unsaturated monocarboxylic acids include acrylic acid, methacrylic acid, α-ethylacrylic acid, crotonic acid, cinnamic acid, and the like.

Specific examples of the α,β-ethylenically unsaturated dicarboxylic acids include butenedioic acids such as fumaric acid and maleic acid; itaconic acid; citraconic acid; chloromaleic acid; and the like. These monomers listed above include those present as anhydrides thereof.

Among these, preferred are α,β-ethylenically unsaturated dicarboxylic acid monoester monomers, more preferred are linear monoalkyl esters of butenedioic acid and butenedioic acid monoesters having an alicyclic structure, still more preferred are mono-n-butyl fumarate, mono-n-butyl maleate, monocyclohexyl fumarate, and monocyclohexyl maleate, and particularly preferred is mono-n-butyl fumarate.

The acrylic rubber (A) used in the present invention contains a carboxyl group-containing monomer unit, and thus contains a carboxyl group as a cross-linking point.

The cross-linking point equivalent [a] (mephr) in the acrylic rubber (A) used in the present invention satisfies the following formula (1) . 10 mephr ≤ cross-linking point equivalent [a] ≤ 25 mephr

Herein, the term "cross-linking point equivalent [a] (mephr)" refers to 1,000 times the equivalent (ephr) of cross-linking point in 100 parts by weight of the acrylic rubber (A). The unit is mephr, that is, "milliequivalent per hundred rubber". For example, when the monomer units having the cross-linking point in the acrylic rubber (A) include only monomer units each having one carboxyl group, such as α,β-ethylenically unsaturated dicarboxylic acid monoester monomer units and/or monocarboxylic acid monomer units, the cross-linking point equivalent [a] is equal to 1,000 times the equivalent (ephr) of the monomer units each having one carboxyl group in 100 parts by weight of the acrylic rubber (A).

When the cross-linking point equivalent [a] is too small, it is difficult to give a primarily cross-linked product having sufficient mechanical properties. On the other hand, the production of an acrylic rubber (A) having too high a cross-linking point equivalent [a] is not easy. Moreover, it is difficult for the acrylic rubber composition to have good scorch stability and give a primarily cross-linked product having good mechanical properties at the same time.

The cross-linking point equivalent [a] is not particularly limited as long as it is 10 mephr or more and 25 mephr or less, but is preferably 11 to 22 mephr, more preferably 12 to 20 mephr, still more preferably 12.5 to 18 mephr, particularly preferably 12.5 to 16 mephr. When the cross-linking point equivalent [a] is within the above-described preferred ranges, the acrylic rubber composition can have much better scorch stability and give a primarily cross-linked product having much better mechanical properties at the same time.

The content of the carboxyl group-containing monomer unit in the total monomer units contained in the acrylic rubber (A) used in the present invention is not particularly limited as long as it allows the cross-linking point equivalent [a] to fall within the above ranges, but is preferably 1.3 to 7.5% by weight, more preferably 1.5 to 5.0% by weight, still more preferably 1.7 to 4.0% by weight, particularly preferably 1.9 to 3.5% by weight, most preferably 2.0 to 3.0% by weight. When the content of the carboxyl group-containing monomer unit is within the above-described ranges, the acrylic rubber composition can have much better scorch stability and give a primarily cross-linked product having much better mechanical properties at the same time.

The acrylic rubber (A) used in the present invention preferably contains an α,β-ethylenically unsaturated dicarboxylic acid monoester monomer unit as the carboxyl group-containing monomer unit. In this case, in the acrylic rubber (A) used in the present invention, the ratio by weight of the content of the α,β-ethylenically unsaturated dicarboxylic acid monoester monomer unit to the content of the carboxyl group-containing monomer unit [content of the α,β-ethylenically unsaturated dicarboxylic acid monoester monomer unit/content of carboxyl group-containing monomer unit] is preferably 50 to 100% by weight, more preferably 70 to 100% by weight, still more preferably 90 to 100% by weight. In one embodiment of the present invention, the acrylic rubber (A) may contain only an α,β-ethylenically unsaturated dicarboxylic acid monoester monomer unit as the carboxyl group-containing monomer unit. That is, the above-described ratio by weight may be substantially 100% by weight.

In addition to the monomer units described above, the acrylic rubber (A) used in the present invention may contain units of an additional monomer that can copolymerize with the monomers. Examples of such a copolymerizable additional monomer include, but should not be limited to, conjugated diene monomers, non-conjugated diene monomers, aromatic vinyl monomers, α,β-ethylenically unsaturated nitrile monomers, acrylamide monomers, α,β-ethylenically unsaturated dicarboxylic acid diester monomers, other olefin monomers, and the like.

Examples of the conjugated diene monomers include 1,3-butadiene, isoprene, piperylene, and the like.

Examples of the non-conjugated diene monomers include ethylidene norbornene, dicyclopentadiene, dicyclopentadienyl (meth)acrylate, 2-dicyclopentadienylethyl (meth)acrylate, and the like.

Examples of the aromatic vinyl monomers include styrene, α-methylstyrene, divinylbenzene, and the like.

Examples of the α,β-ethylenically unsaturated nitrile monomers include acrylonitrile, methacrylonitrile, and the like.

Examples of the acrylamide monomers include acrylamide, methacrylamide, and the like.

Examples of the α,β-ethylenically unsaturated dicarboxylic acid diester monomers include maleic acid dialkyl esters having C₁ to C₁₈ alkyl groups, such as dimethyl maleate and di-n-butyl maleate; fumaric acid dialkyl esters having C₁ to C₁₈ alkyl groups, such as dimethyl fumarate and di-n-butyl fumarate; maleic acid dicycloalkyl esters having C₄ to C₁₆ cycloalkyl groups, such as dicyclopentyl maleate and dicyclohexyl maleate; fumaric acid dicycloalkyl esters having C₄ to C₁₆ cycloalkyl groups, such as dicyclopentyl fumarate and dicyclohexyl fumarate; itaconic acid dialkyl esters having C₁ to C₁₈ alkyl groups, such as dimethyl itaconate and di-n-butyl itaconate; itaconic acid dicycloalkyl esters having C₄ to C₁₆ cycloalkyl groups, such as dicyclohexyl itaconate; and the like.

Examples of other olefin monomers include ethylene, propylene, vinyl chloride, vinylidene chloride, vinyl acetate, ethyl vinyl ether, butyl vinyl ether, and the like.

The copolymerizable additional monomers can be used alone or in combination. The content of units of the copolymerizable additional monomers in the monomer units contained in the acrylic rubber (A) used in the present invention is preferably 48.7% by weight or less, more preferably 28.5% by weight or less, still more preferably 18.5% by weight or less, particularly preferably 13.5% by weight or less, most preferably 8.0% by weight or less.

The acrylic rubber (A) used in the present invention can be obtained by polymerizing the monomers described above. As a type of the polymerization reaction, any method of emulsion polymerization, suspension polymerization, bulk polymerization, and solution polymerization can be used. From the viewpoint of ease in control of the polymerization reaction, preferred is emulsion polymerization under normal pressure.

Emulsion polymerization may be performed by any one of a batchwise method, a semi-batchwise method, and a continuous method. The polymerization is performed in the temperature range of usually 0 to 70°C, preferably 5 to 50°C. The total amount of all the above-mentioned monomers need not always be fed to the reaction system from the start of the reaction. In consideration of the copolymerization reactivity ratio, the reaction conversion ratio, and the like, these monomers may be continuously or intermittently added over the entire reaction time, or may be introduced in batch or in portions in the middle or latter stage. Although the proportions of the above-mentioned monomers charged in the polymerization reaction can be adjusted according to the reactivities of the monomers, the polymerization reaction often progresses approximately quantitatively. In consideration of such circumstances, the proportions thereof charged can be determined according to the monomer unit composition of the acrylic rubber (A) to be produced. After the polymerization, solidification and then drying are performed, giving a solid acrylic rubber (A).

Although the acrylic rubber (A) used in the present invention can have any form, the acrylic rubber (A) may have a bale form, a sheet form, a powder form, and the like.

### <Polyamine-based cross-linking agent (B)>

The acrylic rubber composition according to the present invention comprises 0.4 to 1.6 parts by weight of the polyamine-based cross-linking agent (B) relative to 100 parts by weight of the acrylic rubber (A).

The polyamine-based cross-linking agent (B) is not particularly limited as long as it is a compound having two or more amino groups, or it is an agent that can form a compound having two or more amino groups in cross-linking. Examples of the polyamine-based cross-linking agent (B) include aliphatic polyamine compounds and carbonates thereof, aromatic polyamine compounds, and the like.

Examples of the aliphatic polyamine compounds and carbonates thereof include, but should not be limited to, hexamethylenediamine, hexamethylenediamine carbamate, N,N'-dicinnamylidene-1,6-hexanediamine, and the like. Among these, preferred is hexamethylenediamine carbamate.

Examples of aromatic polyamine compounds include, but should not be limited to, 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2-bis[4-(4-aminophenoxy)phenyl]propane (BAPP), 4,4'-diaminobenzanilide, 4,4'-bis(4-aminophenoxy)biphenyl, m-xylylenediamine, p-xylylenediamine, 1,3,5-benzenetriamine, and the like. Among these, preferred is 2,2'-bis[4-(4-aminophenoxy)phenyl]propane (RAPP).

Among these, the polyamine-based cross-linking agent (B) is preferably a diamine compound, that is, a compound having two amino groups, or an agent that can form a compound having two amino groups in cross-linking. As the polyamine-based cross-linking agent (B), preferred are aromatic polyamine compounds, and more preferred are aromatic diamine compounds.

The content of the polyamine-based cross-linking agent (B) in the acrylic rubber composition according to the present invention is 0.4 to 1.6 parts by weight relative to 100 parts by weight of the acrylic rubber (A). When the content of the polyamine-based cross-linking agent (B) is too large or too small, it is difficult for the acrylic rubber composition to have good scorch stability and give a primarily cross-linked product having good mechanical properties at the same time.

The content of the polyamine-based cross-linking agent (B) is not particularly limited as long as it is 0.4 to 1.6 parts by weight relative to 100 parts by weight of the acrylic rubber (A), but is preferably 0.6 to 1.2 parts by weight, more preferably 0.75 to 1.1 parts by weight. When the content of the polyamine-based cross-linking agent (B) is within the above-described ranges, the acrylic rubber composition can have much better scorch stability and give a primarily cross-linked product having much better mechanical properties at the same time.

The acrylic rubber composition according to the present invention may contain an additional cross-linking agent other than the polyamine-based cross-linking agent (B). The content of the additional cross-linking agent is preferably 0.5 parts by weight or less, more preferably 0.1 parts by weight or less relative to 100 parts by weight of the acrylic rubber (A).

### <Cross-linking retarder (C)>

The acrylic rubber composition according to the present invention further comprises 0.4 to 1.5 parts by weight of a cross-linking retarder (C) relative to 100 parts by weight of the acrylic rubber (A).

As the cross-linking retarder (C), preferred are monoamine-based cross-linking retarders, and more preferred are primary monoamine compounds. The primary monoamine compound is a compound where one hydrogen atom in ammonia is substituted by a hydrocarbon group, and examples thereof include aliphatic primary monoamines, alicyclic primary monoamines, aromatic primary monoamines, amino alcohols, aminooxo compounds, and the like. Among these, preferred are aliphatic primary monoamines, and particularly preferred are aliphatic primary monoamine having 8 to 20 carbon atoms. When the aromatic polyamine compound as the polyamine-based cross-linking agent (B) and the aliphatic primary monoamine as the cross-linking retarder (C) are used in combination, extremely good scorch stability can be achieved.

Examples of the aliphatic primary monoamines include methylamine, ethylamine, propylamine, allylamine, isopropylamine, n-butylamine, t-butylamine, sec-butylamine, hexylamine, heptylamine, octylamine, nonylamine, decylamine, undecylamine, dodecylamine, tridecylamine, tetradecylamine, pentadecylamine, cetylamine, 2-ethylhexylamine, octadecylamine, cis-9-octadecenylamine, nonadecylamine, and the like. Among these, preferred are aliphatic primary monoamines having 8 to 20 carbon atoms, such as octylamine, decylamine, dodecylamine, tetradecylamine, cetylamine, octadecylamine, cis-9-octadecenylamine, nonadecylamine, and the like.

Examples of the alicyclic primary monoamines include cyclopropylamine, cyclobutylamine, cyclopentylamine, cyclohexylamine, and the like.

Examples of the aromatic primary monoamines include aniline, o-toluidine, m-toluidine, benzylamine, α-naphthylamine, β-naphthylamine, and the like.

Examples of the amino alcohols include amino alcohols, such as aminoethanol, aminopropanol, D,L-alaninol, 2-aminobutyl alcohol, 2-amino-2-methylpropanol, 2-amino-2-hydroxymethyl-1,3-propanediol, 2-amino-2-methylpropane-1,3-diol, 2-amino-2-ethyl-1,3-propanediol, 1-chloro-3-aminopropan-2-ol, 3-amino-1,2-propanediol, 2-amine-1,3-propanediol, and the like.

Examples of the aminooxo compounds include 3-methoxypropylamine, 3-ethoxypropylamine, and the like.

The content of the cross-linking retarder (C) in the acrylic rubber composition according to the present invention is 0.4 to 1.5 parts by weight relative to 100 parts by weight of the acrylic rubber (A). When the content of the cross-linking retarder (C) is too large or too small, it is difficult for the acrylic rubber composition to have good scorch stability and give a primarily cross-linked product having good mechanical properties at the same time.

The content of the cross-linking retarder (C) is not particularly limited as long as it is 0.4 to 1.5 parts by weight relative to 100 parts by weight of the acrylic rubber (A), but is preferably 0.6 to 1.25 parts by weight, more preferably 0.7 to 1.1 parts by weight. When the content of the cross-linking retarder (C) is within the above-described ranges, the acrylic rubber composition can have much better scorch stability and give a primarily cross-linked product having much better mechanical properties at the same time.

### <Formula (2)>

The relation among the cross-linking point equivalent [a] (mephr), the cross-linking agent amine equivalent [b] (mephr), and the cross-linking retarder amine equivalent [c] (mephr) in the acrylic rubber composition according to the present invention satisfies the following formula (2). 2 ≤ (cross-linking point equivalent [a] - cross- linking retarder amine equivalent [c])/cross-linking agent amine equivalent [b] ≤ 4

Herein, the term "cross-linking agent amine equivalent [b] (mephr)" refers to 1,000 times the amino group equivalent (ephr) in the polyamine-based cross-linking agent (B) per 100 parts by weight of the acrylic rubber (A). For example, when the polyamine-based cross-linking agent (B) is a diamine compound, the cross-linking agent amine equivalent [b] is equal to 2,000 times the number of molecules of the polyamine-based cross-linking agent (B) per 100 parts by weight of the acrylic rubber (A). When the polyamine-based cross-linking agent (B) is an agent that can form a compound having two or more amino groups in cross-linking, the term "amino group equivalent" in the polyamine-based cross-linking agent (B) refers to the amino group equivalent in cross-linking.

Herein, the term "cross-linking retarder amine equivalent [c] (mephr)" refers to 1,000 times the amino group equivalent (ephr) in the cross-linking retarder (C) per 100 parts by weight of the acrylic rubber (A). For example, when the cross-linking retarder (C) is a monoamine-based cross-linking retarder, the cross-linking retarder amine equivalent [c] is equal to 1,000 times the molar number of molecules (ephr) of the cross-linking retarder (C) per 100 parts by weight of the acrylic rubber (A).

In formula (2), the value of (cross-linking point equivalent [a] - cross-linking retarder amine equivalent [c])/cross-linking agent amine equivalent [b] (hereinafter, sometimes referred to as "K value") is 2 or more and 4 or less. When K value is too large or too small, it is difficult for the acrylic rubber composition to have good scorch stability and give a primarily cross-linked product having good mechanical properties at the same time.

The K value is not particularly limited as long as it is 2 or more and 4 or less, but is preferably 2 or more and 3.75 or less, more preferably 2.125 or more and 3.5 or less, still more preferably 2.25 or more and 3.25 or less. When the K value is within the above-described ranges, the acrylic rubber composition can have much better scorch stability and give a primarily cross-linked product having much better mechanical properties at the same time.

### <Other components>

The acrylic rubber composition according to the present invention preferably contains a cross-linking accelerator.

As the cross-linking accelerator, guanidine compounds, diazabicycloalkene compounds, imidazole compounds, quaternary onium salts, tertiary phosphine compounds, aliphatic monovalent secondary amine compounds, aliphatic monovalent tertiary amine compounds, and the like can be used. These basic cross-linking accelerators can be used alone or in combination.

Specific examples of guanidine compounds include 1,3-di-o-tolylguanidine, 1,3-diphenylguanidine, and the like. Specific examples of diazabicycloalkene compounds include 1,8-diazabicyclo[5.4.0]undec-7-ene (DBU), 1,5-diazabicyclo[4.3.0]non-5-ene, and the like. Specific examples of imidazole compounds include 2-methylimidazole, 2-phenylimidazole, and the like. Specific examples of quaternary onium salts include tetra-n-butylammonium bromide, octadecyltri-n-butylammonium bromide, and the like. Specific examples of tertiary phosphine compounds include triphenylphosphine, tri-p-tolylphosphine, and the like.

The aliphatic monovalent secondary amine compounds are compounds where two hydrogen atoms of ammonia are substituted by an aliphatic hydrocarbon group. The aliphatic hydrocarbon groups which substitute the hydrogen atoms are preferably C₁ to C₃₀ aliphatic hydrocarbon groups. Specific examples of the aliphatic monovalent secondary amine compounds include dialkylmonoamine compounds, such as dimethylamine, diethylamine, dipropylamine, diallylamine, diisopropylamine, di-n-butylamine, di-t-butylamine, di-sec-butylamine, dihexylamine, diheptylamine, dioctylamine, dinonylamine, didecylamine, diundecylamine, didodecylamine, ditridecylamine, ditetradecylamine, dipentadecylamine, dicetylamine, di-2-ethylhexylamine, dioctadecylamine, and the like.

The aliphatic monovalent tertiary amine compounds are compounds where all the three hydrogen atoms of ammonia are substituted by an aliphatic hydrocarbon group. The aliphatic hydrocarbon groups which substitute the hydrogen atoms are preferably C₁ to C₃₀ aliphatic hydrocarbon groups. Specific examples of the aliphatic monovalent tertiary amine compounds include trialkylmonoamines, such as trimethylamine, triethylamine, tripropylamine, triallylamine, triisopropylamine, tri-n-butylamine, tri-t-butylamine, tri-sec-butylamine, trihexylamine, triheptylamine, trioctylamine, trinonylamine, tridecylamine, triundecylamine, tridodecylamine, and the like.

Among these, preferred are guanidine compounds, diazabicycloalkene compounds, and aliphatic monovalent secondary amine compounds, more preferred are guanidine compounds and diazabicycloalkene compounds, and still more preferred are 1,3-di-o-tolylguanidine and 1,8-diazabicyclo[5.4.0]undec-7-ene (DBU).

The content of the cross-linking accelerator in the acrylic rubber composition according to the present invention is preferably 0.1 to 10 parts by weight, more preferably 0.5 to 6 parts by weight, still more preferably 1 to 4 parts by weight relative to 100 parts by weight of the acrylic rubber (A). When the content of the cross-linking accelerator is within the above-described ranges, the acrylic rubber composition can have much better scorch stability and give a primarily cross-linked product having much better mechanical properties at the same time.

The acrylic rubber composition according to the present invention may contain rubber other than the acrylic rubber (A).

Examples of the rubber other than the acrylic rubber (A) that can be used in the present invention include, but should not be limited to, acrylic rubber other than the acrylic rubber (A) used in the present invention, natural rubber, polybutadiene rubber, polyisoprene rubber, styrene-butadiene rubber, acrylonitrile-butadiene rubber, silicon rubber, fluorocarbon rubber, olefin elastomers, styrene elastomers, vinyl chloride elastomers, polyester elastomers, polyamide elastomers, polyurethane elastomers, polysiloxane elastomers, and the like. These can be used alone or in combination.

The proportion of the acrylic rubber (A) component in the rubber components contained in the acrylic rubber composition can be appropriately selected according to the purpose of usage, and is preferably 70% by weight or more, more preferably 90% by weight or more, still more preferably 95% by weight or more, particularly preferably 100% by weight (that is, an embodiment where the rubber components contained in the acrylic rubber composition contain substantially only an acrylic rubber (A) component).

The acrylic rubber composition according to the present invention preferably contains fillers such as a reinforcing filler and a non-reinforcing filler.

Examples of the reinforcing filler include carbon blacks such as furnace black, acetylene black, thermal black, channel black, and graphite; silicas such as wet silica, dry silica, and colloidal silica; and the like. Examples of the non-reinforcing filler include quartz powder, clay such as diatomite, zinc oxide, basic magnesium carbonate, active calcium carbonate, magnesium silicate, aluminum silicate, titanium dioxide, talc, aluminum sulfate, calcium sulfate, barium sulfate, and the like. The fillers can be used alone or in combination.

The content of the fillers in the acrylic rubber composition according to the present invention is not particularly limited, but is preferably 1 to 200 parts by weight, more preferably 10 to 150 parts by weight, still more preferably 20 to 100 parts by weight relative to 100 parts by weight of the rubber components including the acrylic rubber (A) in the acrylic rubber composition.

The acrylic rubber composition according to the present invention may further contain an antioxidant as needed. Examples of the antioxidant include, but should not be limited to, phenolic antioxidants such as sterically hindered phenolic antioxidants, semi-hindered phenolic antioxidants, less hindered phenolic antioxidants, and phenolic antioxidants having no hindered group; phosphorous acid ester antioxidants; sulfur ester antioxidants; secondary amine antioxidants such as phenyl-α-naphthylamine, phenyl-β-naphthylamine, p-(p-toluenesulfonylamide)-diphenylamine, 4,4'-bis(α,α-dimethylbenzyl)diphenylamine, N,N-diphenyl-p-phenylenediamine, N-isopropyl-N'-phenyl-p-phenylenediamine, and butylaldehyde-aniline condensates; imidazole antioxidants; quinoline antioxidants; hydroquinone antioxidants; and the like.

These antioxidants can be used alone or in combination. Although the content of the antioxidant in the rubber composition according to the present invention is not particularly limited, the content is preferably 0.01 to 15 parts by weight, more preferably 0.05 to 10 parts by weight, still more preferably 0.1 to 5 parts by weight relative to 100 parts by weight of the rubber components including the copolymer rubber according to the present invention.

Besides the ingredients described above, the acrylic rubber composition according to the present invention can contain compounding agents usually used in the rubber processing field. Examples of such compounding agents include photostabilizers; plasticizers; softening agents; processing aids; tackifiers; lubricants; greases; flame retardants; antifungal agents; antistatic agents; colorants; and the like. These compounding agents can be compounded in any amount in the range not inhibiting the object and effect of the present invention, and can be appropriately compounded in amounts according to the purpose of compounding.

The acrylic rubber composition according to the present invention can be prepared by compounding the cross-linking agent, the cross-linking retarder, and a variety of optional compounding agents with the rubber components containing the acrylic rubber (A), mixing and kneading these ingredients with an open roll mill, a Banbury mixer, or a kneader, and further kneading the ingredients with a kneading roll.

Although the ingredients can be compounded in any order, preferred order is as follows. Ingredients which barely react or decompose by heat are sufficiently mixed, and then ingredients which readily react or decompose by heat, such as the cross-linking agent, are mixed in a short time at a temperature at which the reaction and the decomposition thereof are avoided.

The acrylic rubber composition according to the present invention has a Mooney viscosity (ML1+4, 100°C) of preferably 10 to 80, more preferably 20 to 70, still more preferably 30 to 60.

### <Cross-linked rubber>

The cross-linked rubber according to the present invention is obtained by cross-linking the above-mentioned acrylic rubber composition according to the present invention.

The cross-linked rubber according to the present invention can be produced as follows: The acrylic rubber composition according to the present invention is formed with a forming machine which can form the acrylic rubber composition into a desired shape, such as an extruder, an injection molding machine, a press, or a roll, and the formed product is cross-linked by heating into a cross-linked rubber having a fixed shape. In this case, cross-linking may be performed after the acrylic rubber composition is preliminarily formed, or cross-linking and forming may be performed at the same time. The forming temperature is usually 10 to 140°C, preferably 25 to 120°C.

The cross-linking temperature is usually 150 to 190°C, preferably 160 to 180°C, and the cross-linking time is usually 2 to 60 minutes, preferably 3 to 40 minutes. The heating method is appropriately selected from methods used in cross-linking of rubber, such as press heating, steam heating, oven heating, and hot air heating.

In the method for manufacturing the cross-linked rubber according to the present invention, secondary cross-linking is not necessarily performed, but secondary cross-linking may be performed. The secondary cross-linking is usually performed under a heated air atmosphere at 130 to 220°C for 1 to 48 hours.

From the viewpoint of productivity, energy saving, and carbon neutrality, the cross-linked rubber according to the present invention is preferably a primarily cross-linked product of the acrylic rubber composition according to the present invention. For example, the cross-linked rubber according to the present invention is preferably a primarily cross-linked product obtained by performing heat-cross-linking of the acrylic rubber composition according to the present invention at a temperature of 150°C to 190°C for 2 to 60 minutes.

The cross-linked rubber according to the present invention is suitably used as sealing materials such as O-rings, packings, diaphragms, oil seals, shaft seals, bearing sheaths, mechanical seals, wellhead seals, seals for electrical and electronic devices, and seals for air compressors; a variety of gaskets such as cylinder head gaskets attached to a connection between a cylinder block and a cylinder head, rocker cover gaskets attached to a connection between a rocker cover and a cylinder head, oil pan gaskets attached to a connection between an oil pan and a cylinder head or a transmission case, gaskets for fuel cell separators attached between a pair of housings to sandwich a unit cell including a positive electrode, an electrolyte plate, and a negative electrode, and a gasket for top covers for hard disk drives; buffer materials; vibration insulators; coating materials for electric wires; industrial belts; tubing materials and hose materials; belt materials; boot materials; sheets; and the like.

The cross-linked rubber according to the present invention is also suitably used as extrusion molded products and cross-linked products used in automobile applications, for example, fuel oil hoses for fuel tanks such as fuel hoses, filler neck hoses, vent hoses, vapor hoses, and oil hoses, air hoses such as turbo air hoses and transmission control hoses, and a variety of hose materials such as radiator hoses, heater hoses, brake hoses, and air conditioner hoses.

### EXAMPLES

Hereinafter, the present invention will be more specifically described by way of Examples, but the present invention will not be limited to these Examples. Note that the term "part(s)" is weight-based unless otherwise specified. A variety of physical properties were measured as follows.

### <Cross-linking point equivalent>

The cross-linking point equivalent [a] in an acrylic rubber was determined by dissolving a rubber specimen in acetone and performing potentiometric titration using a potassium hydroxide solution.

### <Mooney scorch time [t5]>

Mooney scorch time [t5] of an acrylic rubber composition was measured at a temperature of 125°C according to JIS K6300. When the Mooney scorch time [t5] is 15 minutes or longer, the scorch stability can be determined to be good.

### <Maximum torque [MH]>

A cross-linking test of an acrylic rubber composition was performed using a rubber vulcanization tester (Moving Die Rheometer MDR, available from Alpha Technologies, Inc.) at 170°C for 20 minutes. The maximum torque [MH] was calculated from the results of the cross-linking test.

### <Normal-state physical properties of cross-linked acrylic rubber (primarily cross-linked product)>

According to JIS K6251, a test piece was cut from a sheet-shaped cross-linked acrylic rubber (primarily cross-linked product), and tensile strength, elongation, and stress at 100% elongation of the obtained test piece were measured. When the stress at 100% elongation is 3 or more, it can be determined that the cross-linked rubber has sufficient mechanical properties.

### <Properties of cross-linked acrylic rubber (primarily cross-linked product) after heating>

The sheet-shaped cross-linked acrylic rubber (cross-linked acrylic rubber) was subjected to an air oven heat aging test under an atmosphere at 175°C for 72 hours according to JIS K6257. Then, according to JIS K6251, a test piece was cut from the cross-linked acrylic rubber after the air oven heat aging test, and tensile strength and elongation of the obtained test piece were measured.

### <Compression set [CS] of cross-linked acrylic rubber (primarily cross-linked product)>

A cylindrical cross-linked acrylic rubber (primarily cross-linked product) was measured according to JIS K6262 to determine compression set [CS] under compression conditions at a compression ratio of 25% at 175°C for 72 hours.

### <Rate of increase in stress at 100% elongation by secondary cross-linking>

A sheet-shaped cross-linked acrylic rubber (primarily cross-linked product) was heated in an oven at 170°C for 4 hours to obtain a secondarily cross-linked product. According to JIS K6251, a test piece was cut from the secondarily cross-linked product, and the stress at 100% elongation of the obtained test piece was measured. Then, the rate of increase in stress at 100% elongation by secondary cross-linking was calculated according to the following formula. Rate (%) of increase in stress at 100% elongation by secondary cross-linking = (stress at 100% elongation of secondarily cross-linked product - stress at 100% elongation of primarily cross-linked product)/stress at 100% elongation of primarily cross-linked product × 100

When the rate of increase in stress at 100% elongation by secondary cross-linking is smaller, it can be determined that cross-linking reaction by only primary cross-linking is more dominant.

### <Example 1>

### (Production of acrylic rubber)

A polymerization reactor equipped with a thermometer, a stirring device, a nitrogen inlet pipe, and a decompression device was charged with 200 parts of water, 3 parts of sodium lauryl sulfate, 48.00 parts of ethyl acrylate, 48.00 parts of n-butyl acrylate, and 4 parts of mono-n-butyl fumarate. Thereafter, the oxygen in the reactor was sufficiently removed by repeating reduced-pressure degassing and nitrogen purge. Then, 0.002 parts of sodium formaldehydesulfoxylate and 0.005 parts of cumene hydroperoxide were added to the mixture to initiate an emulsion polymerization reaction at normal pressure and normal temperature, and the reaction was continued until the polymerization conversion ratio reached 95%. The resulting polymer emulsion was coagulated with a magnesium sulfate aqueous solution, followed by washing and drying to prepare an acrylic rubber (ACM-1). The content of mono-n-butyl fumarate units in the resulting acrylic rubber (ACM-1) was 3.25% by weight. The cross-linking point equivalent [a] in the acrylic rubber (ACM-1) was 18.90 mephr as determined according to the method described above.

### (Production of acrylic rubber composition)

100 Parts of an acrylic rubber (ACM-1), 60 parts of carbon black (trade name "Seast SO ", available from Tokai Carbon Co., Ltd.), 2 parts of stearic acid (dispersing and softening agent for carbon black), 1 part of ester wax (trade name "Gleck G-8205", available from DIC Corporation), 0.95 parts of octadecylamine (LIPOMIN 18D, available from LION SPECIALTY CHEMICALS CO., LTD., monoamine-based cross-linking retarder), and 2 parts of 4,4'-bis(α,α-dimethylbenzyl)diphenylamine (antioxidant) were kneaded using a Banbury mixer, and thereafter 0.90 parts of BAPP (2,2'-bis[4-(4-aminophenoxy)phenyl]propane, polyamine-based cross-linking agent (diamine-type)) and 2.00 parts of a cross-linking accelerator 1 (trade name "NOCCELER DT", available from OUCHI SHINKO CHEMICAL INDUSTRIAL CO., LTD., 1,3-di-o-tolylguanidine) were added thereto, and kneaded at 50°C using an open roll mill to give an acrylic rubber composition. The resulting acrylic rubber composition was analyzed according to the methods described above to determine Mooney scorch time [t5] and maximum torque [MH]. The results are shown in Table 1.

The cross-linking agent amine equivalent [b] in the acrylic rubber composition was 4.38 mephr, and the cross-linking retarder amine equivalent [c] was 3.52 mephr. Using these values, the value of (cross-linking point equivalent [a] - cross-linking retarder amine equivalent [c])/cross-linking agent amine equivalent [b] (that is, K value) was determined to be 3.51.

### (Production of cross-linked acrylic rubber)

The acrylic rubber composition was pressed at a pressure of 10 MPa at 170°C for 20 minutes for molding and cross-linking to give a sheet-shaped cross-linked acrylic rubber (primarily cross-linked product) with a dimension of 15 cm × 15 cm × 2 mm. The resulting sheet-shaped cross-linked acrylic rubber (primarily cross-linked product) was analyzed to determine normal-state physical properties, physical properties after heating, and rate of increase in stress at 100% elongation by secondary cross-linking. The results are shown in Table 1. In addition, the acrylic rubber composition was pressed at a pressure of 10 MPa at 170°C for 20 minutes for molding and cross-linking to give a cylindrical cross-linked acrylic rubber (primarily cross-linked product) having a diameter of 29 mm and a thickness of 12.5 mm, and the resulting cylindrical cross-linked acrylic rubber was analyzed to determine compression set [CS]. The results are shown in Table 1.

### <Examples 2 to 7, Comparative Examples 1 to 12>

### (Production of acrylic rubber)

Acrylic rubbers were produced in the same manner as in Example 1 except that the monomers as described in Tables 1 to 3 were used in the amounts as described in Tables 1 to 3 instead of 48.00 parts of ethyl acrylate, 48.00 parts of n-butyl acrylate, and 4 parts of mono-n-butyl fumarate. The contents of mono-n-butyl fumarate units in the resulting acrylic rubbers were as shown in Tables 1 to 3. The cross-linking point equivalents [a] in the resulting acrylic rubbers were as shown in Tables 1 to 3 as determined according to the method described above.

### (Production of acrylic rubber composition)

Acrylic rubber compositions were obtained in the same manner as in Example 1 except that the acrylic rubbers obtained above were used instead of the acrylic rubber (ACM-1), and the amounts of octadecylamine (cross-linking retarder) and BAPP (amine-based cross-linking agent) and the types and the amounts of cross-linking accelerators used were as shown in Tables 1 to 3. In Example 7 and Comparative Example 3, a cross-linking accelerator 2 (trade name "Rhenogran XLA-60", available from Rhein Chemie Corporation, 1,8-diazabicyclo[5.4.0]undec-7-ene (DBU): 60% (including that forming zinc dialkyldiphosphate salt), and acrylic acid polymers and dispersing agents: 40%) was used. The resulting acrylic rubber compositions were analyzed as in Example 1. The results are shown in Tables 1 to 3. In the acrylic rubber compositions, cross-linking agent amine equivalent [b], cross-linking retarder amine equivalent [c], and K value in formula (1) were calculated, and the results are shown in Tables 1 to 3.

### <Comparative Example 13>

A polymerization reactor equipped with a thermometer, a stirring device, a nitrogen inlet pipe, and a decompression device was charged with 200 parts of water, 3 parts of sodium lauryl sulfate, 64.10 parts of ethyl acrylate, 21.90 parts of n-butyl acrylate, 7.50 parts of methoxyethyl acrylate, and 6.50 parts of mono-n-butyl fumarate. Thereafter, the oxygen in the reactor was sufficiently removed by repeating reduced-pressure degassing and nitrogen purge. Then, 0.002 parts of sodium formaldehydesulfoxylate and 0.005 parts of cumene hydroperoxide were added to the mixture to initiate an emulsion polymerization reaction at normal pressure and normal temperature, and the reaction was continued until the polymerization conversion ratio reached 95%. As a result, significant aggregation occurred during the emulsion polymerization, and no desired acrylic rubber was obtained. Note that the resulting polymer emulsion was coagulated with magnesium sulfate aqueous solution, followed by washing and drying to prepare a coagulated product. The content of mono-n-butyl fumarate units in the coagulated product was measured and determined to be 5.10% by weight. The cross-linking point equivalent [a] was 29.65 mephr as determined according to the method described above.

### [Table 1]

**Table 1**

| | | | Example 1 | Example 2 | Example 3 | Example 4 | Example 5 | Example 6 | Example 7 |
|---|---|---|---|---|---|---|---|---|---|
| Monomers used for production of acrylic rubber | | | | | | | | | |
| | Ethyl acrylate (EA) | parts by weight | 48.00 | 48.25 | 48.75 | 48.50 | 48.50 | 67.60 | 67.60 |
| | n-Butyl acrylate (BA) | parts by weight | 48.00 | 48.25 | 48.75 | 48.50 | 48.50 | 21.90 | 21.90 |
| | 2-Methoxyethyl acrylate (MEA) | parts by weight | | | | | | 7.50 | 7.50 |
| | Mono-n-butyl fumarate (MBF) | parts by weight | 4.00 | 3.50 | 2.50 | 3.00 | 3.00 | 3.00 | 3.00 |

| Type of acrylic rubber | | | ACM-1 | ACM-2 | ACM-3 | ACM-4 | ACM-4 | ACM-5 | ACM-5 |
|---|---|---|---|---|---|---|---|---|---|
| | Content of M BF unit | % by weight | 3.25 | 2.76 | 2.13 | 2.42 | 2.42 | 2.59 | 2.59 |
| | Cross-linking point equivalent [a] | mephr | 18.90 | 16.05 | 12.38 | 14.07 | 14.07 | 15.06 | 15.06 |

| Composition of acrylic rubber composition | | | | | | | | | |
|---|---|---|---|---|---|---|---|---|---|
| | Acrylic rubber | parts by weight | 100 | 100 | 100 | 100 | 100 | 100 | 100 |
| | Octadecylamine (rnonoarrine-based cross-linking retarder) | parts by weight | 0.95 | 0.90 | 0.80 | 0.85 | 1.30 | 0.70 | 0.75 |
| | BAPP (polyamine-based cross-linking agent) | parts by weight | 0.90 | 0.90 | 0.90 | 0.90 | 0.80 | 0.80 | 0.85 |
| | Cross-linking accelerator 1 (1,3-Di-o-tolylguanidine) | parts by weight | 2.00 | 2.00 | 2.00 | 2.00 | 2.00 | 2.00 | |
| | Cross-linking accelerator 2 (containing DBU) | parts by weight | | | | | | | 2.00 |

| Value of formula (2) | | | | | | | | | |
|---|---|---|---|---|---|---|---|---|---|
| | Cross-linking agent amine equivalent [b] | mephr | 4.38 | 4.38 | 4.38 | 4.38 | 4.38 | 3.89 | 4.14 |
| | Cross-linking retarder amine equivalent [c] | mephr | 3.52 | 3.33 | 2.96 | 3.15 | 4.81 | 2.59 | 2.78 |
| | Value of ([a]-[c])/[b] (that is, K value) | | 3.51 | 2.00 | 2.15 | 2.49 | 2.11 | 3.20 | 2.97 |

| Cross-linking properties of acrylic rubber composition | | | | | | | | | |
|---|---|---|---|---|---|---|---|---|---|
| | Mooney scorch time [t5] (125°C) | min | 15.23 | 16.27 | 18.28 | 17.20 | 22.60 | 15.18 | 15.48 |
| | M aximum torque [MH] (170°C) | dN-m | 10.67 | 10.57 | 10.42 | 10.50 | 9.94 | 9.79 | 10.21 |

| Physical properties of cross-linked acrylic rubber (primarily cross-linked product) | | | | | | | | | |
|---|---|---|---|---|---|---|---|---|---|
| | Tensile strength | MPa | 10.1 | 9.92 | 9.69 | 9.79 | 9.34 | 10.5 | 10.5 |
| | Elongation | % | 280 | 280 | 290 | 290 | 300 | 310 | 2.90 |
| | Stress at 100% elongation | MPa | 4.06 | 4.02 | 3.96 | 3.99 | 3.78 | 3.79 | 3.92 |
| | Tensile strength after heating (175°C × 72h) | MPa | 6.67 | 6.54 | 6.39 | 6.45 | 6.16 | 6.94 | 6.93 |
| | Elongation after heating (175°C × 72h) | % | 330 | 330 | 340 | 340 | 350 | 360 | 340 |
| | Compression set [CS] (175°C × 72h) | % | 18.1 | 21.7 | 28.9 | 25.1 | 29.4 | 23.9 | 29.3 |
| | Rate of increase in stress at 100% elongation by secondary cross-linking | % | +1 | +4 | +17 | +10 | +17 | +1 | +4 |

### [Table 2]

**Table 2**

| | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Monomers used for production of acrylic rubber | | | | | | | | |
| | Ethyl acrylate (EA) | parts by weight | 69.50 | 69.50 | 48.25 | 48.50 | 48.50 | 48.50 |
| | n-Butyl acrylate (BA) | parts by weight | 21.90 | 21.90 | 50.00 | 48.50 | 48.50 | 48.50 |
| | 2-Methoxyethyl acrylate (MEA) | parts by weight | 7.50 | 7.50 | | | | |
| | Mono-n-butyl fumarate (MBF) | parts by weight | 1.10 | 1.10 | 1.75 | 3.00 | 3.00 | 3.00 |

| Type of acrylic rubber | | | ACM-6 | ACM-6 | ACM-7 | ACM-4 | ACM-4 | ACM-4 |
|---|---|---|---|---|---|---|---|---|
| | Content of MBF unit | % by weight | 0.91 | 0.91 | 1.46 | 2.42 | 2.42 | 2.42 |
| | Cross-linking point equivalent [a] | mephr | 5.29 | 5.29 | 8.49 | 14.07 | 14.07 | 14.07 |

| Composition of acrylic rubber composition | | | | | | | | |
|---|---|---|---|---|---|---|---|---|
| | Acrylic rubber | parts by weight | 100 | 100 | 100 | 100 | 100 | 100 |
| | Octadecylamine (rronoamine-⁻based cross-linking retarder) | parts by weight | 0.00 | 0.50 | 0.30 | 0.85 | 0.35 | 1.70 |
| | BAPP (polyamine-based cross-linking agent) | parts by weight | 0.80 | 0.80 | 0.80 | 0.30 | 0.90 | 0.90 |
| | Cross-linking accelerator 1 (1,3-Di-o-tolylguanidine) | parts by weight | 2.00 | 2.00 | | 2.00 | 2.00 | 2.00 |
| | Cross-linking accelerator 2 (containing DBU) | parts by weight | | | 2.00 | | | |

| Value of formula (2) | | | | | | | | |
|---|---|---|---|---|---|---|---|---|
| | Cross-linking agent amine equivalent [b] | mephr | 3.89 | 3.89 | 3.89 | 1.46 | 4.38 | 4.38 |
| | Cross-linking retarder amine equivalent [c] | mephr | 0.00 | 1.85 | 1.11 | 3.15 | 1.30 | 6.30 |
| | Value of ([a]-[c])/[b] (that is, K value) | | 1.36 | 0.88 | 1.90 | 7.48 | 2.92 | 1.77 |

| Cross-linking properties of acrylic rubber composition | | | | | | | | |
|---|---|---|---|---|---|---|---|---|
| | Mooney scorch time [t5] (125°C) | min | 28.17 | 34.17 | 19.35 | 20.80 | 11.20 | 27.40 |
| | Maximum torque [MH] (170°C) | dN·m | 10.60 | 8.95 | 9.98 | 4.80 | 11.12 | 9.44 |

| Physical properties of cross-linked acrylic rubber (primarily cross-linked product) | | | | | | | | |
|---|---|---|---|---|---|---|---|---|
| | Tensile strength | MPa | 10.3 | 9.82 | 9.73 | 9.19 | 10.3 | 8.94 |
| | Elongation | % | 290 | 340 | 300 | 630 | 270 | 320 |
| | Stress at 100% elongation | MPa | 4.05 | 3.47 | 3.81 | 2.06 | 4.22 | 3.59 |
| | Tensile strength after heating (175°C × 72h) | MPa | 6.82 | 6.52 | 6.43 | 6.23 | 6.78 | 5.90 |
| | Elongation after heating (175°C × 72h) | % | 340 | 400 | 350 | 750 | 310 | 380 |
| | Compression set [CS] (175°C × 72h) | % | 49.3 | 73.3 | 36.5 | 9.0 | 21.5 | 34.9 |
| | Rate of increase in stress at 100% elongation by secondary cross-linking | % | +44 | +84 | +23 | +1 | +4 | +26 |

### [Table 3]

**Table 3**

| | | | Comp. Ex. 7 | Comp. Ex. 8 | Comp. Ex. 9 | Comp. Ex. 10 | Comp. Ex. 11 | Camp. Ex. 12 | Camp, Ex. 13 |
|---|---|---|---|---|---|---|---|---|---|
| Monomers used for production of acrylic rubber | | | | | | | | | |
| | Ethyl acrylate (EA) | parts by weight | 49.00 | 49.00 | 49.00 | 48.75 | 48.75 | 48.75 | 64.10 |
| | n-Butyl acrylate (BA) | parts by weight | 49.00 | 49.00 | 49.00 | 48.75 | 48.75 | 48.75 | 21.90 |
| | 2-Methoxyethyl acrylate (MEA) | parts by weight | | | | | | | 7.50 |
| | Mono-n-butyl fumarate (MBF) | parts by weight | 2.00 | 2.00 | 2.00 | 2.50 | 2.50 | 2.50 | 6.50 |
| Type of acrylic rubber | | | ACM-8 | ACM-8 | ACM-8 | ACM-3 | ACM-3 | ACM-3 | ACM-9 |
| | Content of MBF unit | % by weight | 1.53 | 1.53 | 1.53 | 2.13 | 2.13 | 2.13 | 5.10 |
| | Cross-linking point equivalent [a] | | 8.90 | 8.90 | 8.90 | 12.38 | 12.38 | 12.38 | 29.65 |

| Composition of acrylic rubber composition | | | | | | | | | |
|---|---|---|---|---|---|---|---|---|---|
| | Acrylic rubber | parts by weight | 100 | 100 | 100 | 100 | 100 | 100 | 100 |
| | Octadecylamine (monoamine-based cross-linking retarder) | parts by weight | 0.85 | 0.45 | 0.70 | 0.60 | 0.45 | 1.20 | |
| | BAPP (polyamine-based cross-linking agent) | parts by weight | 120 | 0.90 | 0.90 | 1.50 | 0.45 | 1.60 | |
| | Cross-linking accelerator 1 (1,3-Di-o-tolylguanidine) | parts by weight | 2.00 | 2.00 | 2.00 | 2.00 | 2.00 | 2.00 | 2.00 |
| | Cross-linking accelerator 2 (containing DBU) | parts by weight | | | | | | | |

| Value of formula (2) | | | | | | | | | |
|---|---|---|---|---|---|---|---|---|---|
| | Cross-linking agent amine equivalent [b] | | 5.84 | 4.38 | 4.38 | 7.30 | 2.19 | 7.79 | |
| | Cross-linking retarder amine equivalent [c] | | 3.15 | 1.67 | 2.59 | 2.22 | 1.67 | 4.44 | |
| | Value of ([a]-[c])/[b] (that is, K value) | | 0.98 | 1.65 | 1.44 | 1.39 | 4.89 | 1.02 | |

| Cross-linking properties of acrylic rubber composition | | | | | | | | | |
|---|---|---|---|---|---|---|---|---|---|
| | Mooney scorch time [t5] (125°C) | min | 22.61 | 19.61 | 22.61 | 12.28 | 16.78 | 18.88 | |
| | Maximum torque [MH] (170°C) | dN-m | 12.73 | 10.67 | 10.18 | 16.40 | 6.64 | 16.51 | |

| Physical properties of cross-linked acrylic rubber (primarily cross-linked product) | | | | | | | | | |
|---|---|---|---|---|---|---|---|---|---|
| | Tensile strength | MPa | 9.64 | 9.74 | 949 | 10.5 | 9.59 | 9.99 | |
| | Elongation | % | 240 | 280 | 300 | 190 | 450 | 180 | |
| | Stress at 100% elongation | MPa | 4.73 | 4.04 | 3.87 | 5.99 | 2.69 | 6.00 | |
| | Tensile strength after heating (175°C × 72h) | MPa | 627 | 6.41 | 6.25 | 6.74 | 6.44 | 6.38 | |
| | Elongation after heating (175°C × 72h) | % | 280 | 330 | 350 | 220 | 530 | 210 | |
| | Compression set [CS] (175°C × 72h) | % | 62.2 | 37.3 | 42.6 | 44.1 | 13.2 | 59.8 | |
| | Rate of increase in stress at 100% elongation by secondary cross-linking | % | +72 | +31 | +39 | +42 | +1 | +68 | |

As shown in Table 1, acrylic rubber compositions each comprising particular amounts of a predetermined acrylic rubber (A), a predetermined polyamine-based cross-linking agent (B), and a predetermined cross-linking retarder (C), wherein the relation among the cross-linking point equivalent [a], the cross-linking agent amine equivalent [b], and the cross-linking retarder amine equivalent [c] satisfied formulae (1) and (2), showed a long scorch time (t5) of 15 minutes or longer. Moreover, such acrylic rubber compositions had good scorch stability (processing stability), and also gave cross-linked rubbers having sufficient mechanical properties without performing secondary cross-linking (Examples 1 to 7).

On the other hand, when the content of the polyamine-based cross-linking agent (B) or the cross-linking retarder (C) relative to 100 parts by weight of the acrylic rubber (A) was out of the predetermined range, the scorch time (t5) was too short, or the resulting primarily cross-linked products had inferior tensile properties or compression set resistance, that is, such acrylic rubber compositions could not have good scorch stability and give a primarily cross-linked product having good mechanical properties at the same time (Comparative Examples 1 and 3 to 6).

In addition, even if the contents of the polyamine-based cross-linking agent (B) and the cross-linking retarder (C) relative to 100 parts by weight of the acrylic rubber (A) were within particular ranges, when the K value was not within the predetermined range, the scorch time (t5) was too short, or the resulting primarily cross-linked products had inferior tensile properties or compression set resistance, that is, such acrylic rubber compositions could not have good scorch stability and give a primarily cross-linked product having good mechanical properties at the same time (Comparative Examples 2 and 7 to 12).

## Claims

1. An acrylic rubber composition comprising an acrylic rubber (A), a polyamine-based cross-linking agent (B), and a cross-linking retarder (C),
wherein the acrylic rubber (A) contains at least one of an alkyl (meth)acrylate ester monomer unit and an alkoxyalkyl (meth)acrylate ester monomer unit, and a carboxyl group-containing monomer unit,
the content of the polyamine-based cross-linking agent (B) is 0.4 to 1.6 parts by weight relative to 100 parts by weight of the acrylic rubber (A),
the content of the cross-linking retarder (C) is 0.4 to 1.5 parts by weight relative to 100 parts by weight of the acrylic rubber (A), and
the relation among cross-linking point equivalent [a] (mephr), cross-linking agent amine equivalent [b] (mephr), and cross-linking retarder amine equivalent [c] (mephr) satisfies the following formulae (1) and (2): 10 mephr ≤ cross-linking point equivalent [a] ≤ 25 mephr 2 ≤ (cross-linking point equivalent [a] - cross- linking retarder amine equivalent [c])/cross-linking agent amine equivalent [b] ≤ 4

2. The acrylic rubber composition according to claim 1, wherein the polyamine-based cross-linking agent (B) is a diamine compound.

3. The acrylic rubber composition according to claim 1 or 2, wherein the polyamine-based cross-linking agent (B) is an aromatic polyamine compound.

4. The acrylic rubber composition according to any one of claims 1 to 3, wherein the cross-linking retarder (C) is a monoamine-based cross-linking retarder.

5. The acrylic rubber composition according to any one of claims 1 to 4, further comprising a filler.

6. A cross-linked rubber obtained by cross-linking the acrylic rubber composition according to any one of claims 1 to 5.

7. A hose material, a sealing material, a tubing material, a belt material, or a boot material comprising the cross-linked rubber according to claim 6.
